# EUROPEAN PATENT SPECIFICATION

(11) **EP 4 452 600 B1**
(45) Date of publication and mention of the grant of the patent: **04.02.2026**
(21) Application number: 22835136.7
(22) Date of filing: 19.12.2022
(51) Int. Cl.: B29C 51/00, B31B 50/59, B65B 7/28, B65B 47/04, B65B 25/00, B29C 51/08, B29C 51/26, B29C 51/42

(54) **METHOD FOR MAKING A PACKAGE IN SHEET MATERIAL**
VERFAHREN ZUR HERSTELLUNG EINER VERPACKUNG AUS BLATTMATERIAL
PROCÉDÉ DE FABRICATION D'UN EMBALLAGE DANS UN MATÉRIAU EN FEUILLE

(30) Priority: 23.12.2021 IT 202100032465
(43) Date of publication of application: 30.10.2024
(73) Proprietor: SOREMARTEC S.A., 2633 Senningerberg (LU)
(72) Inventor: MANSUINO, Sergio, 2633 SENNINGERBERG (LU); TAVELLA, Andrea, 2633 SENNINGERBERG (LU); FRANCO, Luca, 2633 SENNINGERBERG (LU); BARELLO, Maurizio, 2633 SENNINGERBERG (LU)
(74) Representative: Buzzi, Notaro & Antonielli d'Oulx S.p.A.
(86) International application number: PCT/IB2022/062473
(87) International publication number: WO 2023/119121

(56) References cited:
- EP-A1- 3 819 224
- EP-A2- 2 322 339
- WO-A1-2015/082268
- WO-A1-2020/127147
- WO-A1-99/28118
- DE-A1- 3 641 127
- JP-A- H0 948 067
- US-A- 3 746 497
- US-A- 4 143 587
- US-A- 4 228 121

## Description

The present invention relates to a method for making a package in sheet material.

In particular, the method described herein has been developed for making a package that includes at least one sheet of packaging material comprising at least one layer of paper.

In particular, the method described herein envisages subjecting the aforesaid sheet of packaging material to a step of forming in a mould to form on the sheet a hollow portion surrounded by a perimetral portion that extends around the hollow portion.

The method described herein envisages insertion of at least one product into the hollow portion and then coupling of a second sheet of packaging material to the first sheet via an operation of heat-sealing of the two sheets along the perimetral portion of the first sheet.

Already known in the art are methods for forming in a mould a sheet of packaging material comprising at least one layer of paper. For instance, the document WO2015/082268A1 describes a method for forming a sheet of paper in which the sheet is pushed into a mould cavity by way of a forming member while it is engaged by a withholding member along a region thereof arranged around the mould cavity so that the sheet will enter the mould cavity as a result of two combined actions, represented by sliding of the sheet with respect to the withholding member and deformation by stretching of the sheet itself.

In this context, the object of the present invention is to develop a method for making a package as described above that will be able to provide a shaped sheet, comprising at least one layer of paper, characterized by a hollow portion having a ratio between depth and width higher than 0.39, preferably between 1:1.8 and 1:2.5.

In addition, the object of the present invention is to develop a method that will be able to form a shaped sheet in which the folds of the sheet present on the aforesaid hollow portion and perimetral portion project by a stretch of less than or equal to 0.2 mm.

To return to the document WO2015/082268A1, the forming method described therein generates on the sheet a series of folds, which are caused by the fact that, at least for a part of the process, the sheet is inserted into the mould cavity, adapting to the shape of the latter, by simple repositioning of the sheet from the original plane configuration to the three-dimensional configuration imposed by the mould cavity and by the forming member.

The document WO2015/082268A1 points out that the presence of these folds on the aforesaid second peripheral portion of the sheet thus formed constitutes an obstacle to proper execution of an operation of heat-sealing for coupling to the sheet a second sheet of packaging material in order to make a package as described above.

To overcome the above problem, the document WO2015/082268A1 teaches providing on the aforesaid second peripheral portion a coating configured for covering the aforesaid folds and defining a new smooth surface on which to perform the operation of heat-sealing of the second sheet.

EP3819224A1, WO2020/127147A1, US4143587A and JPH0948067A disclose further prior art representing technical backgropund. In particular EP3819224A1 discloses a method in accordance with the preamble of claim 1 and a corresponding package obtained by the method.

In this context, the object of the present invention is, moreover, to develop a method for making a package as described above that will be improved as compared to the prior art referred to, in particular that can do without the coating operation taught in the document WO2015/082268A1.

One or more of the aforesaid objects are achieved via a method according to claim 1.

The claims form an integral part of the teaching provided herein.

Further characteristics and advantages of the invention will emerge clearly from the ensuing description, with reference to the annexed drawings, which are provided purely by way of non-limiting example and in which:
- Figure 1 is a schematic illustration of an example of the method described herein;
- Figure 2 illustrates a mould used in the method of Figure 1, and the shaped sheet obtained via the above mould;
- Figure 3 is a schematic illustration of means used in an embodiment of the method described herein;
- Figure 4 is a schematic illustration of means used in an embodiment of the method described herein;
- Figure 5 illustrates an example of package obtained via the method described herein;
- Figure 6 illustrates an example of detection performed via a laser-scanning device on a sheet obtained via the method described herein; and
- Figure 7 illustrates a sheet of packaging material used in an embodiment of the method described herein.

In the ensuing description, various specific are illustrated, details aimed at enabling an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

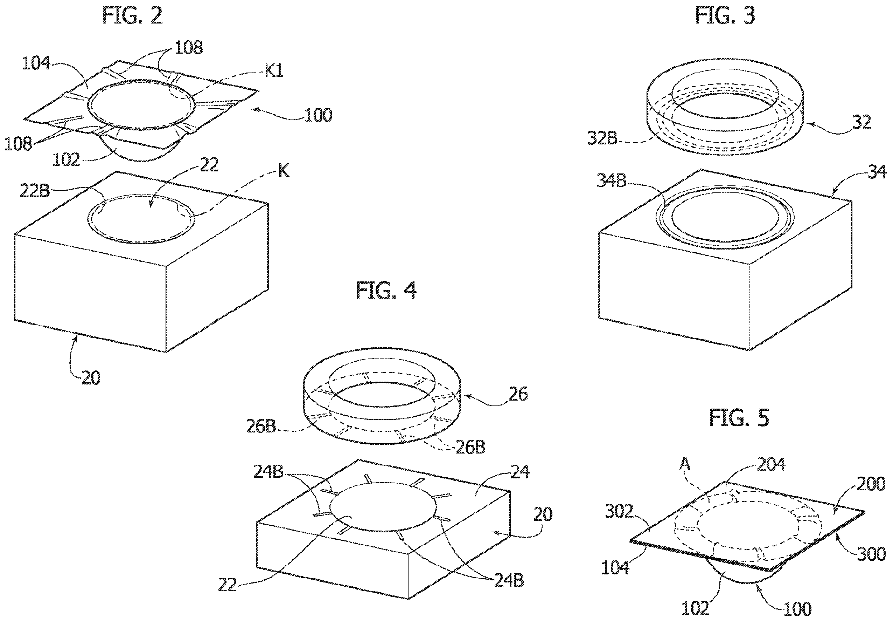

With reference to Figure 5, the method described herein envisages providing, in general, a package 300 comprising at least one sheet 100 of packaging material, including at least one layer of paper, which is shaped so as to present a hollow portion 102 surrounded by a perimetral portion 104, and a second sheet 200 of packaging material, which is coupled to the first sheet 100 so as to close the hollow portion 102 with respect to the outside and is fixed to the perimetral portion 104 of the first sheet as a result of a heat-sealing operation. The perimetral portion 104 defines an angle with the region of the hollow portion proximal thereto that is equal to or greater than 90°, preferably between 90° and 180°.

The packaged product P is inserted into the hollow portion 102 of the first sheet 100 prior to coupling of the first sheet to the second sheet 200.

The method described herein has been developed for applications on foodstuff products, in particular confectionery products, but it is clear that the same teachings provided herein can advantageously be reproduced also for applications on products of some other type.

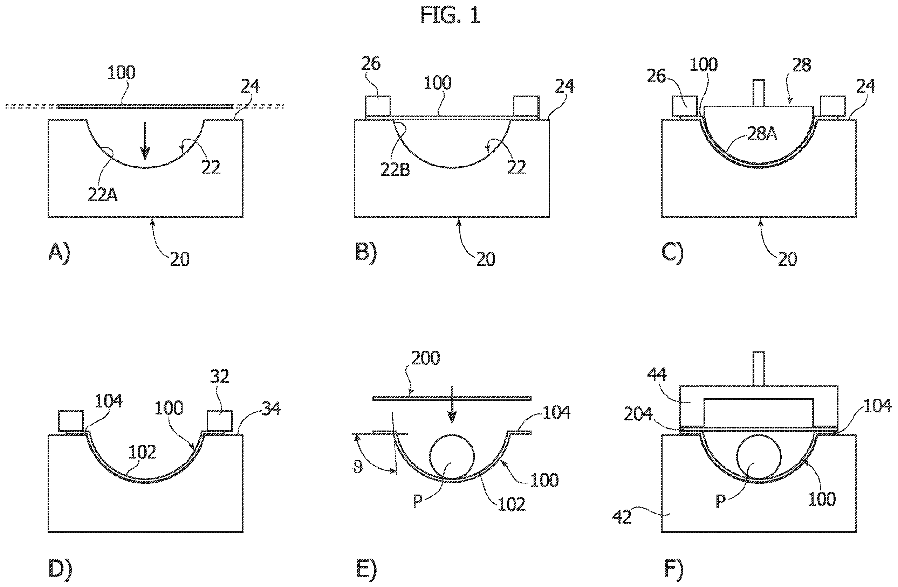

With reference now to Figure 1, the method described herein envisages the use of a sheet 100 of packaging material comprising at least one layer of paper. The layer of paper may present, for example, a substance comprised between 40 g/m² and 500 g/m².

Preferably, the sheet 100 comprises a paper that is deformable, in particular extensible (i.e., deformable by lengthening in both of the orthogonal directions of the plane of the sheet), according to an amount greater than 1%, preferably below 10% (for both of the aforesaid directions). The extensibility of the sheet may, for example, be measured according to the ISO 1924-3 standard.

The sheet 100 may, for example, comprise the paper sold under the commercial name FibreForm^{®} by the Swedish company BillerudKorsnäs AB.

The sheet 100 may comprise one or more additional layers coupled to the layer of paper, preferably at least one inner lining made of heat-sealable material, for example PE.

To return to Figure 1, the method described herein moreover envisages the use of a mould 20 comprising a mould cavity 22 delimited by a forming surface 22A and having a supporting surface 24 that surround the mould cavity 22. The forming surface 22A has, at the top, an edge 22B extending along a pre-set closed path K (see Figure 2).

The method described herein envisages positioning the sheet 100 over the mould cavity 22 and resting it on the supporting surface 24 (step A of Figure 1).

A withholding member 26 is then driven to press a portion of the sheet 100, resting on the supporting surface 24, against the surface itself (step B of Figure 1).

While the withholding member 26 presses the sheet 100 against the supporting surface 24, the method described herein envisages driving a forming member 28 to push the sheet 100 into the mould cavity 22 and bring it into contact with the forming surface 22A (step C of Figure 1).

The forming member 28 has an operating surface 28A having a shape complementary to that of the forming surface 22A of the mould cavity 22. Consequently, at the end of the stroke of the forming member 28 within the mould cavity 22, the sheet 100 is in contact with the forming surface 22A over the entire area of the latter.

The pressure exerted by the withholding member 26 on the sheet 100 is such that the sheet 100 moves into the mould cavity 22 and comes to cover the forming surface 22A as a result of two combined actions, represented by (i) sliding of the sheet 100 with respect to the withholding member 26, and (ii) deformation by stretching of the sheet 100.

The steps referred to above create in the sheet a hollow portion 102, having a shape complementary to that of the forming surface 22A, which is surrounded by a perimetral portion 104, which extends around the hollow portion 102 along a predefined profile K1 corresponding to the path K of the top edge 22B of the mould cavity 22 (see Figure 2).

As a result of the forming process described above, a series of folds 108 come to be formed on the sheet 100, which are identified by respective folding lines of the sheet 100 oriented in a direction transverse to the predefined profile K of the top edge 22B of the mould cavity 22.

As already mentioned previously, the folds in question are caused by the fact that the sheet 100 passes from the initial plane configuration to the three-dimensional configuration imposed by the mould 20 and by the forming member 28 at least partially as a result of a simple repositioning of the sheet in space.

The action exerted by the withholding member 26 favours formation of the folds 108 on the perimetral portion 104, and also on the hollow portion 102, but limitedly to a region thereof along the predefined profile K1, in the proximity of the perimetral portion 104.

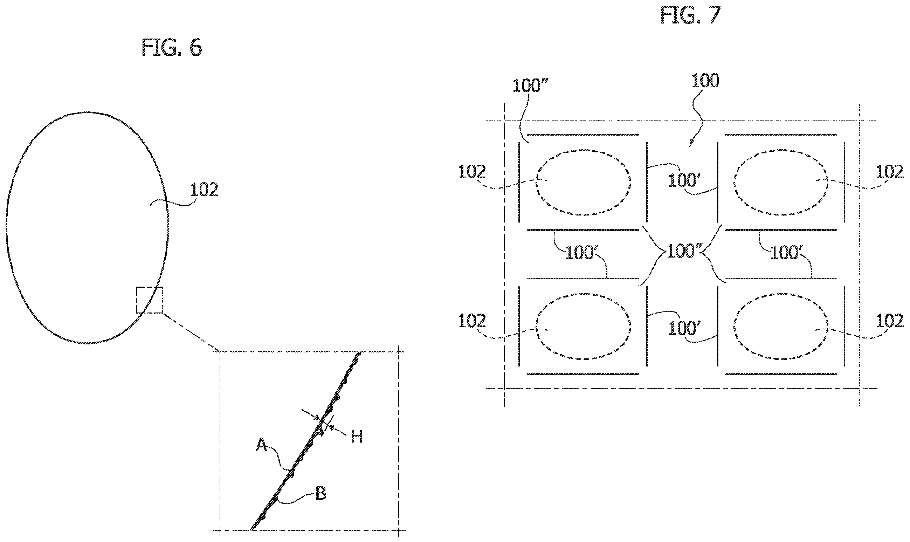

In one or more preferred embodiments, the folds 108 project from the outer surface of the hollow portion 102 and from the plane of the perimetral portion 104 by a stretch of less than or equal to 0.2 mm. This value can be detected via a laser-scanning device. In this connection, Figure 6 illustrates an example of detection performed via a device of this type in the region along the portion K1 of the hollow portion 102. In Figure 6, the profile A represents a theoretical, i.e., ideal, profile, whereas the profile B represents the real profile detected via laser scanning. The projections of the profile B visible in the enlargement represent the aforesaid folds 108.

In one or more preferred embodiments, the mould 20 is made of metal, for example aluminium, and is heated so that its forming surface 22A and/or its supporting surface 24 will be at a pre-set temperature, preferably between 60°C and 100°C.

In one or more preferred embodiments, like the one illustrated, the withholding member 26 is itself also made of metal, preferably aluminium, and is heated to a pre-set temperature, preferably between 20°C and 60°C.

The pressure exerted by the withholding member 26 is preferably constant and comprised, once again preferably, between 5 N/cm² and 20 N/cm².

In one or more preferred embodiments, the forming member 28 is heated so that its operating surface 28A will be at a pre-set temperature, preferably between 20°C and 60°C.

In one or more preferred embodiments, the forming member 28 is made of a compliant material. Preferably, the forming member 28 is made of a plastic material, for example polyurethane, even more preferably having a hardness of not less than 60 SH.

The aforesaid heated members and components perform the function of in turn heating the sheet 100 so as to favour deformation thereof by stretching, as described above.

On the other hand, the forming member 28 made of compliant material makes it possible to compensate for possible variations of thickness of the sheet 100 due to formation of the folds 108 during the operation of forming of the sheet.

In one or more preferred embodiments, like the one illustrated, the forming surface 22A of the mould cavity 22 and the operating surface 28A of the forming member 28 are configured for creating a region of the hollow portion 102, extending along the predefined profile K1, that defines, with the perimetral portion 104, an angle equal to or greater than 90°, preferably comprised between 90° and 180°, even more preferably comprised between 90° and 95°.

According to an important characteristic, the method described herein further includes an operation in which a pressure member 32 presses the perimetral portion 104 of the first shaped sheet 100 against a contrast surface 34 so as to subject the perimetral portion 104 of the first sheet 100 to an action of stretching along a path parallel to the predefined profile K1 (step D of Figure 1).

The present applicant has noted that the aforesaid stretching action enables reduction of the variation of thickness of the perimetral portion 104 due to the presence of the folds 108, with the benefit of enabling heat-sealing of a second sheet of packaging material on the perimetral portion in a proper way and also obtaining hermetic sealing between the two sheets, without the need to apply a levelling coating on the perimetral portion as taught by the document WO/2015/082268A1.

With reference to Figure 3, in a preferred embodiment, provided in the contrast surface 34 is an annular groove 34B that extends in a direction parallel to the predefined profile K1 of the perimetral portion 104 set on the contrast surface, and provided on the pressure member is an annular relief 32 B having a complementary shape that is to penetrate into the annular groove 34B.

In the action of the pressure member against the perimetral portion 104, the annular relief 32B pushes the perimetral portion 104 of the sheet 100 into the annular groove 34B so as to exert an action of stretching of the perimetral portion 104 in a direction transverse to the predefined profile K1.

It should be noted that, in the embodiment illustrated above, provision of the groove 34B and of the relief 32B in the contrast surface 34 and on the pressure member 32, respectively, may also be reversed.

The width and depth of the groove 34B (and accordingly the width and height of the relief 32B) can be identified experimentally with a view to obtaining a region A of the perimetral portion 104 (see Figure 5), characterized by a variation of thickness of less than 0.2 mm. In the absence of the aforesaid operation of stretching on the perimetral portion of the sheet formed, it is possible to detect variations of thickness even of the order of the millimetre.

The region A preferably extends along the entire perimetral portion 104 and has a width L that can be selected according to the needs of the specific applications, but that, in general, is such that as to enable fixing to a second sheet 200 of packaging material via a heat-sealing operation. Preferably, the width L is of at least 2 **mm.**

To return to Figure 1, following upon the operation carried out by the pressure member 32, the method described herein then envisages the use of a second sheet 200 of packaging material, which preferably itself comprises at least one layer of paper, to close the hollow portion 102 of the shaped sheet 100 (step E of Figure 1).

The second sheet 200 may be of the same type as the sheet 100 or else of a different type, according to the requirements of the specific applications.

The sheet 200 may be a shaped sheet obtained in the same way as described above with reference to the sheet 100; i.e., it may comprise a hollow portion similar to the portion 102, which is surrounded by a perimetral portion similar to the portion 104. In one or more preferred embodiments, the second sheet 200 may be prepared so as to present a perimetral edge having a shape and/or dimensions corresponding to those of the outer edge of the perimetral portion 104.

The method described herein envisages heat-sealing of the second sheet 200 to the first shaped sheet 100 along the perimetral portion 104.

In particular, the method described herein envisages positioning the first sheet 100 on a supporting member 42 in a condition in which the perimetral portion 104 rests on the supporting member 42 and operating a heat-sealing member 44 to press a corresponding portion 204 of the second sheet 200 against the perimetral portion 104 and heat the portion 204 and/or the perimetral portion 104 to bring about mutual fixing thereof (step F of Figure 1).

In one embodiment (not illustrated), the heat-sealing member 44 and the supporting member 42 are configured to define also the aforesaid pressure member 32 and the aforesaid contrast surface 34 that are designed to exert an action of stretching of the perimetral portion 104.

In this case, also the portion 204 of the second sheet 200 may be subjected to an action of stretching of the same type.

The present applicant has noted that the aforesaid action of stretching has the effect of favouring a perfect adhesion between the two portions 104, and 204 notwithstanding the presence of the folds 108. In this connection, the present applicant has found experimentally that, via the heat-sealing operation thus conducted, it is possible to perform hermetic sealing between the two sheets 100 and 200.

In one or more preferred embodiments, the supporting member 42 is made of a compliant material.

The present applicant has found that this characteristic makes it possible to perform the aforesaid action of stretching of the portion 104, by the heat-sealing member 44, simply as a result of the variation of thickness created by the presence of the folds 108. In fact, where the sheet is thicker on account of the presence of a fold, the heat-sealing member 44 will press the sheet with a greater force that tends to stretch the sheet in a direction transverse to the line of folding that defines the fold itself.

In one or more preferred embodiments, the supporting member 42 is made of a plastic material, for example polyurethane, preferably having a hardness of not less than 60 SH.

In one or more preferred embodiments, the heat-sealing member 44 is heated to a pre-set temperature, preferably between 120°C and 180°C. Preferably, the force of pressure exerted by the heat-sealing member 44 is at least equal to 100 N/cm².

Finally, in one or more preferred embodiments, the method described herein may envisage an operation of cutting of the flange of the package 300 obtained in the way described above, which is formed by the perimetral portion 104 of the shaped sheet 100 and by the corresponding portion 204 of the second sheet 200, to provide a rim 302 with predefined profile (see Figure 5).

The method described above may be implemented using a sheet 100 and a sheet 200, provided as single sheets, as described above and illustrated in the figures, or else using a sheet 100 and/or a sheet 200, which are provided continuously, for example wound off a reel. In this case, the method will include an operation of cutting to separate the single shaped sheet or the single final package from the aforesaid continuous sheets.

In a preferred embodiment, like the one illustrated in Figure 7, the sheet 100 has a total useful area to obtain a given number of hollow portions surrounded by corresponding perimetral portions, and has a series of cuts 100', for example rectilinear cuts, configured to identify a number of distinct regions of the sheet, equal to the given number, on which to form respective hollow portions surrounded by perimetral portions (represented by a dashed line in Figure 7 are the hollow portions 102 that are to be made in the individual regions of the sheet). As a result of the aforesaid cuts, these regions are connected to the remaining parts of the sheet only by narrow connecting portions 100" positioned around the individual regions. The present applicant has found that the aforesaid configuration of the sheet makes it possible to provide simultaneously multiple hollow portions 102, surrounded by corresponding perimetral portions 204, without the operation of forming of a hollow portion possibly affecting the operation of forming of another hollow portion.

With reference now to Figure 4, this illustrates a mould 20 according to a further embodiment of the method described herein, where made in the supporting surface 24 are a series of grooves 24B distributed around the mould cavity 22 and oriented in directions transverse to the aforesaid profile **K.** Likewise, the withholding member 26 has a series of reliefs 26B complementary to the grooves 24B and designed to penetrate into the latter to press the sheet 100 against their inner walls. The grooves 24B and the reliefs 26B exert, on the peripheral portion 104 being formed, an action of stretching of the sheet along a path parallel to the profile K, which enables considerable reduction of the number of folds 108 present on the portion 104 of the shaped sheet 100. Provision of the aforesaid grooves and reliefs in the supporting surface 24 and on the withholding member 26, respectively, may even be reversed.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A method for making a package in sheet material, the method comprising the steps of:
- providing a sheet (100) of packaging material, comprising at least one layer of paper;
- providing a mould (20) comprising a mould cavity (22) delimited by a forming surface (22A) and having a supporting surface (24) that surrounds the mould cavity (22),
wherein the forming surface (22A) has a top edge (22B) extending along a pre-set closed path (K);
- positioning the sheet (100) over the mould cavity (22) and resting on the supporting surface (24);
- driving a withholding member (26) to press against the supporting surface (24) a portion of the sheet (100) resting on the supporting surface (24) itself; and
- while the withholding member (26) presses the sheet (100) against the supporting surface (24), driving a forming member (28) provided with an operating surface (28A) having a shape complementary to that of the forming surface (22A) of the mould cavity (22) to push the sheet (100) into the mould cavity (22) and bring the sheet (100) into contact with the forming surface (22A) of the mould cavity (20), at the end of the action of the forming member on the sheet there being formed a hollow portion (102) surrounded by a perimetral portion (104) that extends along a predefined profile (K1) corresponding to the pre-set path (K),
wherein the forming surface (22A) of the mould cavity (22) and the operating surface (28A) of the forming member (28) are configured for providing a region of the hollow portion (102), extending along the predefined profile (K1), that defines, with the perimetral portion (104), an angle (q) equal to or greater than 90°, preferably comprised between 90° and 180°,
said method further including operating a pressure member (32) to press the perimetral portion (104) of the first sheet (100) against a contrast surface (34) so as to subject the perimetral portion (104) of the first sheet (100) to an action of stretching along a path parallel to the predefined profile (K1), the method being **characterized in that** provided in the pressure member (32) or in the contrast surface (34) is an annular groove (34B) that extends in a direction parallel to the predefined profile (K1) of the perimetral portion (104) pressed between the pressure member (32) and the contrast surface (34), and provided on the contrast surface (34) or on the pressure member (32) is an annular relief (32B) having a complementary shape that is to penetrate into the annular groove (34B), the method comprising, via said annular relief (32B), pushing the perimetral portion (104) of the sheet (100) into said annular groove (34B) so as to exert an action of stretching of the perimetral portion (104) in a direction transverse to the predefined profile (K1).

2. The method according to claim 1, wherein the pressure exerted by the withholding member (26) is such that, following upon the action of the forming member (28), the sheet (100) moves into the mould cavity (22) and comes to cover the forming surface (22A) as a result of two combined actions, which are i) sliding of the sheet (100) with respect to the withholding member (26), and ii) deformation by stretching of the sheet (100), and wherein obtained on the perimetral portion (104) of the formed sheet are a series of folds (108) identified by respective lines of folding of the sheet that are oriented in a direction transverse to the predefined profile (K1), and wherein also obtained on the hollow portion (102) are a series of folds identified by respective lines of folding of the sheet oriented in a direction transverse to the predefined profile (K1), limitedly to a region along the predefined profile (K1), in the proximity of the perimetral portion (104).

3. The method according to claim 1 or claim 2, wherein the forming surface (22A) and/or the supporting surface (24) of the mould (20) are heated to a pre-set temperature, preferably between 60°C and 100°C.

4. The method according to any one of the preceding claims, wherein the forming member (28) is heated to a pre-set temperature, preferably between 20°C and 60°C.

5. The method according to any one of the preceding claims, which further includes driving the forming member (28) to press the sheet (100) against the forming surface (22A) by exerting a total force higher than 3000 N, preferably at least equal to 7000 N.

6. The method according to any one of the preceding claims, wherein the withholding member (26) is heated to a pre-set temperature, preferably between 20°C and 60°C.

7. The method according to claim 1, wherein said pressure member (32) operates after the forming member (28).

8. The method according to any one of the preceding claims, wherein provided in the supporting surface (24) of the mould (20) or in the withholding member (26) are a series of grooves (26B) distributed around the mould cavity (22) and oriented in directions transverse to the pre-set profile (K), and provided on the withholding member (26) or on the supporting surface (24) are a series of reliefs (26B) complementary to the grooves (24B), the method comprising pressing via the reliefs (26B) the sheet (100) into the grooves (24B) so as to exert an action of stretching of the perimetral portion (104) along a path parallel to the predefined profile (K).

9. The method according to any one of the preceding claims, further comprising:
- inserting at least one product into the hollow portion (102);
- providing a second sheet (200) of packaging material;
- heat-sealing the second sheet (200) to the first sheet (100) that has been formed and contains the at least one product in the hollow portion (102).

10. The method according to claim 9,
wherein heat-sealing the second sheet (200) to the first sheet (100) includes:
- providing a supporting member (42) and positioning the first sheet (100) in a condition where the perimetral portion (104) rests on the supporting member (42);
- operating a heat-sealing member (44) to press a corresponding portion (204) of the second sheet (200) against the perimetral portion (104) of the first sheet and heating the corresponding portion (204) of the second sheet (200) and/or the perimetral portion (104) of the first sheet (100) to bring about fixing between the two portions.

11. The method according to claim 10, wherein said pressure member is said heat-sealing member (44) and said contrast surface is defined by said supporting member (42).

12. The method according to claim 11, wherein the supporting member (42) is compliant and wherein the heat-sealing member (44) presses the second sheet and the perimetral portion of the sheet against the compliant supporting member so that, where there is a variation of thickness on the perimetral portion (104) of the sheet created by the presence of folds (108), an action of stretching of the perimetral portion (104) is brought about along a path parallel to the predefined profile (K1) and/or in a direction transverse thereto.

13. The method according to claim 12, wherein the supporting member (42) is made of compliant material, preferably having a hardness of not less than 60 SH.

14. The method according to any one of the preceding claims, wherein the first sheet (100) or both the first sheet (100) and the second sheet (200) comprises/comprise a layer of extensible paper.

15. The method according to any one of the preceding claims, wherein the forming surface (22A) of the mould cavity (22) and the operating surface (28A) of the forming member (28) are configured for providing a region of the hollow portion (102), extending along the predefined profile (K1), that defines, with the perimetral portion (104), an angle (q) equal to or greater than 90°, preferably comprised between 90° and 95°.

16. The method according to any one of the preceding claims, wherein providing a sheet (100) includes providing a sheet having a total useful area for forming a given number of hollow portions surrounded by corresponding perimetral portions, and wherein the sheet (100) has a series of cuts configured to identify a number of distinct regions of the sheet, equal to the given number, on which to form respective hollow portions surrounded by perimetral portions and which are connected to the remaining parts of the sheet only by narrow connection portions positioned around the individual regions.

17. A package obtained via a method according to any one of the preceding claims, wherein the hollow portion (102) of the sheet (100) formed has a ratio between depth and width higher than 0.39, preferably between 1:1.8 and 1:2.5, wherein the perimetral portion (104) defines an angle (q) with the region of the hollow portion (102) extending along the predefined profile (K1) that is equal to or greater than 90°, preferably comprised between 90° and 95°.

18. Package according to claim 17, wherein the folds of the sheet present on the hollow portion (102) project from the outer surface of the hollow portion (102) by a stretch (H) of less than or equal to 0.2 mm.

19. The package according to claim 17, wherein the folds of the sheet present on the perimetral portion (104) project from the plane of the perimetral portion (104) by a stretch of less than or equal to 0.2 mm.

## Patentansprüche

1. Verfahren zum Herstellen einer Verpackung aus Folienmaterial, wobei das Verfahren die folgenden Schritte umfasst:
- Bereitstellen einer Folie (100) aus Verpackungsmaterial, aufweisend zumindest eine Papierschicht;
- Bereitstellen einer Form (20), aufweisend eine Formvertiefung (22) begrenzt durch eine Formoberfläche (22A) und aufweisend eine Tragoberfläche (24), die die Formvertiefung (22) umgibt),
wobei die Formoberfläche (22A) einen oberen Rand (22B) aufweist, der sich entlang eines voreingestellten, geschlossenen Pfads (K) erstreckt;
- Positionieren der Folie (100) über der Formvertiefung (22) und ruhend auf der Tragoberfläche (24);
- Antrieben eines Rückhalteelements (26) zum Drücken eines Abschnitts der Folie (100), der selbst auf der Tragoberfläche ruht, gegen die Tragoberfläche (24); und
- während das Rückhalteelement (26) die Folie (100) gegen die Tragoberfläche (24) drückt, Antreiben eines Formelements (28), das mit einer Wirkoberfläche (28A) versehen ist, die eine Form komplementär zu der der Formoberfläche (22A) der Formvertiefung (22) aufweist, um die Folie (100) in die Formvertiefung (22) zu drücken und die Folie (100) in Kontakt mit der Formoberfläche (22A) der Formvertiefung (20) zu bringen, wobei am Ende der Wirkung des Formelements auf die Folie ein hohler Abschnitt (102) ausgebildet ist, der von einem Umfangsabschnitt (104) umgeben ist, der sich entlang eines vordefinierten Profils (K1) erstreckt, das dem voreingestellten Pfad (K) entspricht,
wobei die Formoberfläche (22A) der Formvertiefung (22) und die Wirkoberfläche (28A) des Formelements (28) dazu ausgestaltet sind, einen Bereich des hohlen Abschnitts (102) bereitzustellen, der sich entlang des vordefinierten Profils (K1) erstreckt, das mit dem Umfangsabschnitt (104) einen Winkel (q) gleich oder größer als 90°, bevorzugt zwischen 90° und 180°, definiert,
wobei das Verfahren ferner Betreiben eines Druckelements (32) zum Drücken des Umfangsabschnitts (104) der ersten Folie (100) gegen eine Kontrastoberfläche (34) umfasst, um den Umfangsabschnitt (104) der ersten Folie (100) einer Dehnwirkung entlang eines Pfads parallel zu dem vordefinierten Profil (K1) auszusetzen, wobei das Verfahren **dadurch gekennzeichnet ist, dass** in dem Druckelement (32) oder in der Kontrastoberfläche (34) eine ringförmige Nut (34B) vorgesehen ist, die sich in einer Richtung parallel zu dem vordefinierten Profil (K1) des Umfangsabschnitts (104) erstreckt, der zwischen dem Druckelement (32) und der Kontrastoberfläche (34) gedrückt wird, und an der Kontrastoberfläche (34) oder an dem Druckelement (32) ein ringförmiges Relief (32B) vorgesehen ist, das eine komplementäre Form aufweist, die dazu dient, in die ringförmige Nut (34B) einzudringen, wobei das Verfahren Drücken, über das ringförmige Relief (32B), des Umfangsabschnitts (104) der Folie (100) in die ringförmige Nut (34B) umfasst, um eine Dehnwirkung des Umfangsabschnitts (104) in einer Richtung quer zu dem vordefinierten Profil (K1) auszuüben.

2. Verfahren nach Anspruch 1, wobei der durch das Rückhalteelement (26) ausgeübte Druck so ist, dass anschließend an die Wirkung des Formelements (28) sich die Folie (100) in die Formvertiefung (22) bewegt und die Formoberfläche (22A) als Ergebnis von zwei kombinierten Wirkungen abdeckt, die i) Gleiten der Folie (100) in Bezug auf das Rückhalteelement (26) und ii) Verformung durch Dehnen der Folie (100) sind, und wobei eine Reihe von Falten (108) an dem Umfangsabschnitt (104) der geformten Folie erhalten werden, die durch jeweilige Faltlinien der Folie identifiziert werden, die in einer Richtung quer zu dem vordefinierten Profil (K1) orientiert sind, und wobei an dem hohlen Abschnitt (102) auch eine Reihe von Falten erhalten werden, die durch jeweilige Faltlinien der Folie identifiziert werden, die in einer Richtung quer zu dem vordefinierten Profil (K1) orientiert sind, begrenzt auf einen Bereich entlang des vordefinierten Profils (K1), in der Nähe des Umfangsabschnitts (104).

3. Verfahren nach Anspruch 1 oder 2, wobei die Formoberfläche (22A) und/oder die Tragoberfläche (24) der Form (20) auf eine voreingestellte Temperatur, bevorzugt zwischen 60°C und 100°C, erwärmt werden.

4. Verfahren nach einem der vorhergehenden Ansprüche, wobei das Formelement (28) auf eine vordefinierte Temperatur, bevorzugt zwischen 20°C und 60°C, erwärmt wird.

5. Verfahren nach einem der vorhergehenden Ansprüche, das ferner Antreiben des Formelements (28) umfasst, um die Folie (100) durch Ausüben einer Gesamtkraft von über 3000 N, bevorzugt zumindest gleich 7000 N, gegen die Formoberfläche (22A) zu drücken.

6. Verfahren nach einem der vorhergehenden Ansprüche, wobei das Rückhalteelement (26) auf eine voreingestellte Temperatur, bevorzugt zwischen 20°C und 60°C, erwärmt wird.

7. Verfahren nach Anspruch 1, wobei das Druckelement (32) nach dem Formelement (28) wirkt.

8. Verfahren nach einem der vorhergehenden Ansprüche, wobei in der Tragoberfläche (24) der Form (20) oder in dem Rückhalteelement (26) eine Reihe von Nuten (26B) vorgesehen ist, die um die Formvertiefung (22) herum verteilt und in Richtungen quer zu dem voreingestellten Profil (K) orientiert sind, und an dem Rückhalteelement (26) oder an der Tragoberfläche (24) eine Reihe von Reliefs (26B) komplementär zu den Nuten (24B) vorgesehen ist, wobei das Verfahren Drücken, über die Reliefs (26B), der Folie (100) in die Nuten (24B) umfasst, um eine Dehnwirkung des Umfangsabschnitts (104) entlang eines Pfads parallel zu dem vordefinierten Profil (K) auszuüben.

9. Verfahren nach einem der vorhergehenden Ansprüche, ferner umfassend:
- Einsetzen zumindest eines Produkts in den hohlen Abschnitt (102);
- Bereitstellen einer zweiten Folie (200) aus Verpackungsmaterial;
- Heißsiegeln der zweiten Folie (200) an der ersten Folie (100), die geformt wurde und das zumindest eine Produkt in dem hohlen Abschnitt (102) enthält.

10. Verfahren nach Anspruch 9,
wobei Heißsiegeln der zweiten Folie (200) an der ersten Folie (100) umfasst:
- Bereitstellen eines Tragelements (42) und Positionieren der ersten Folie (100) in einem Zustand, in dem der Umfangsabschnitt (104) auf dem Tragelement (42) ruht);
- Betreiben eines Heißsiegelelements (44) zum Drücken eines entsprechenden Abschnitts (204) der zweiten Folie (200) gegen den Umfangsabschnitt (104) der ersten Folie und Erwärmen des entsprechenden Abschnitts (204) der zweiten Folie (200) und/oder des Umfangsabschnitts (104) der ersten Folie (100), um Befestigung zwischen den beiden Abschnitten herzustellen.

11. Verfahren nach Anspruch 10, wobei das Druckelement das Heißsiegelelement (44) ist und die Kontrastoberfläche durch das Tragelement (42) definiert ist.

12. Verfahren nach Anspruch 11, wobei das Tragelement (42) nachgiebig ist und wobei das Heißsiegelelement (44) die zweite Folie und den Umfangsabschnitt der Folie gegen das nachgiebige Tragelement drückt, sodass, wo es eine Dickenvariation an dem Umfangsabschnitt (104) der Folie gibt, die durch die Anwesenheit von Falten (108) erzeugt ist, eine Dehnwirkung des Umfangsabschnitts (104) entlang eines Pfads parallel zu dem vordefinierten Profil (K1) und/oder in einer Richtung quer dazu hervorgerufen wird

13. Verfahren nach Anspruch 12, wobei das Tragelement (42) aus einem nachgiebigen Material, bevorzugt mit einer Härte von nicht weniger als 60 SH, besteht.

14. Verfahren nach einem der vorhergehenden Ansprüche, wobei die erste Folie (100) oder beide die erste Folie (100) und die zweite Folie (200) eine Schicht dehnbares Papier aufweist/aufweisen.

15. Verfahren nach einem der vorhergehenden Ansprüche, wobei die Formoberfläche (22A) der Formvertiefung (22) und die Wirkoberfläche (28A) des Formelements (28) dazu ausgestaltet sind, einen Bereich des hohlen Abschnitts (102) bereitzustellen, der sich entlang des vordefinierten Profils (K1) erstreckt, das mit dem Umfangsabschnitt (104) einen Winkel (q) gleich oder größer als 90°, bevorzugt zwischen 90° und 95°, definiert.

16. Verfahren nach einem der vorhergehenden Ansprüche, wobei Bereitstellen einer Folie (100) Bereitstellen einer Folie umfasst, die einen gesamten nutzbaren Bereich zum Formen einer gegebenen Anzahl von hohlen Abschnitten, die von entsprechenden Umfangsabschnitten umgeben sind, aufweist, und wobei die Folie (100) eine Reihe von Schnitten aufweist, die dazu ausgestaltet sind, eine Anzahl gleich der gegebenen Anzahl von bestimmten Bereichen der Folie zu identifizieren, auf denen jeweilige hohle Abschnitte umgeben von Umfangsabschnitten zu formen sind und die mit den übrigen Teilen der Folie nur durch schmale Verbindungsabschnitte verbunden sind, die um die individuellen Bereiche herum positioniert sind.

17. Verpackung, die durch ein Verfahren nach einem der vorhergehenden Ansprüche erhalten wird, wobei der geformte hohle Abschnitt (102) der Folie (100) ein Verhältnis zwischen Tiefe und Breite höher als 0,39, bevorzugt zwischen 1:1,8 und 1:2,5 aufweist, wobei der Umfangsabschnitt (104) einen Winkel (q) mit dem Bereich des hohlen Abschnitts (102), der sich entlang des vordefinierten Profils (K1) erstreckt, definiert, der gleich oder größer als 90°, bevorzugt zwischen 90° und 95°, beträgt.

18. Verpackung nach Anspruch 17, wobei die Falten der Folie an dem hohlen Abschnitt (102) von der äußeren Oberfläche des hohlen Abschnitts (102) um eine Strecke kleiner als oder gleich 0,2 mm vorstehen.

19. Verpackung nach Anspruch 17, wobei die Falten der Folie an dem Umfangsabschnitt (104) von der Fläche des Umfangsabschnitts (104) um eine Strecke kleiner als oder gleich 0,2 mm vorstehen.

## Revendications

1. Procédé de fabrication d'un emballage en matériau en feuille, le procédé comportant les étapes suivantes :
- la fourniture d'une feuille (100) de matériau d'emballage, comportant au moins une couche de papier ;
- la fourniture d'un moule (20) comportant une cavité (22) de moule délimitée par une surface de mise en forme (22A) et présentant une surface de support (24) qui entoure la cavité de moule (22),
dans lequel la surface de mise en forme (22A) présente un bord supérieur (22B) s'étendant le long d'une trajectoire fermée prédéfinie (K) ;
- le positionnement de la feuille (100) sur la cavité de moule (22) et repos sur la surface de support (24) ;
- l'entraînement d'un organe de retenue (26) pour presser contre la surface de support (24) une partie de la feuille (100) reposant sur la surface de support (24) elle-même ; et
- alors que l'organe de retenue (26) presse la feuille (100) contre la surface de support (24), l'entraînement d'un organe de mise en forme (28) doté d'une surface de fonctionnement (28A) présentant une forme complémentaire à celle de la surface de mise en forme (22A) de la cavité de moule (22) pour pousser la feuille (100) dans la cavité de moule (22) et amener la feuille (100) en contact avec la surface de mise en forme (22A) de la cavité de moule (20), à la fin de l'action de l'organe de mise en forme sur la feuille où est formée une partie creuse (102) entourée d'une partie périphérique (104) qui s'étend le long d'un profil prédéfini (K1) correspondant à la trajectoire prédéfinie (K),
dans lequel la surface de mise en forme (22A) de la cavité de moule (22) et la surface de fonctionnement (28A) de l'organe de mise en forme (28) sont configurées pour fournir une région de la partie creuse (102), s'étendant le long du profil prédéfini (K1), qui définit, avec la partie périphérique (104), un angle (q) égal ou supérieur à 90°, de préférence compris entre 90° et 180°,
ledit procédé incluant en outre l'actionnement d'un organe de pression (32) pour presser la partie périphérique (104) de la première feuille (100) contre une surface de contraste (34) de manière à soumettre la partie périphérique (104) de la première feuille (100) à une action d'étirement le long d'un trajet parallèle au profil prédéfini (K1), le procédé étant **caractérisé en ce que** dans l'organe de pression (32) ou dans la surface de contraste (34) une rainure annulaire (34B) est fournie qui s'étend dans une direction parallèle au profil prédéfini (K1) de la partie périphérique (104) pressée entre l'organe de pression (32) et la surface de contraste (34), et sur la surface de contraste (34) ou sur l'organe de pression (32) un relief annulaire (32B) est fourni qui présente une forme complémentaire destinée à pénétrer dans la rainure annulaire (34B), le procédé comportant, via ledit relief annulaire (32B), la poussée de la partie périphérique (104) de la feuille (100) dans ladite rainure annulaire (34B) de manière à exercer une action d'étirement de la partie périphérique (104) dans une direction transversale au profil prédéfini (K1).

2. Procédé selon la revendication 1, dans lequel la pression exercée par l'organe de retenue (26) est telle que, suite à l'action de l'organe de mise en forme (28), la feuille (100) se déplace dans la cavité de moule (22) et vient recouvrir la surface de formation (22A) à la suite de deux actions combinées, qui sont i) le coulissement de la feuille (100) par rapport à l'organe de retenue (26), et ii) la déformation par étirement de la feuille (100), et dans lequel on obtient sur la partie périphérique (104) de la feuille formée une série de plis (108) identifiés par des lignes respectives de pliage de la feuille qui sont orientés dans une direction transversale au profil prédéfini (K1), et dans lequel on obtient également sur la partie creuse (102) une série de plis identifiés par des lignes respectives de pliage de la feuille orientés dans une direction transversale au profil prédéfini (K1), limitée à une région le long du profil prédéfini (K1), à proximité de la partie périphérique (104).

3. Procédé selon la revendication 1 ou la revendication 2, dans lequel la surface de mise en forme (22A) et/ou la surface de support (24) du moule (20) sont chauffées à une température prédéfinie, de préférence entre 60 °C et 100 °C.

4. Procédé selon l'une quelconque des revendications précédentes, dans lequel l'organe de mise en forme (28) est chauffé à une température prédéfinie, de préférence entre 20 °C et 60 °C.

5. Procédé selon l'une quelconque des revendications précédentes, qui comporte en outre l'entraînement de l'organe de mise en forme (28) pour presser la feuille (100) contre la surface de mise en forme (22A) en exerçant une force totale supérieure à 3000 N, de préférence au moins égale à 7000 N.

6. Procédé selon l'une quelconque des revendications précédentes, dans lequel l'organe de retenue (26) est chauffé à une température prédéfinie, de préférence entre 20 °C et 60 °C.

7. Procédé selon la revendication 1, dans lequel ledit organe de pression (32) fonctionne après l'organe de mise en forme (28).

8. Procédé selon l'une quelconque des revendications précédentes, dans lequel dans la surface de support (24) du moule (20) ou dans l'organe de retenue (26) une série de rainures (26B) est disposée, qui sont réparties autour de la cavité de moule (22) et orientées dans des directions transversales au profil préréglé (K), et sur l'organe de retenue (26) ou sur la surface de support (24) une série de reliefs (26B) est disposée, qui sont complémentaires aux rainures (24B), le procédé comportant la pression via les reliefs (26B) de la feuille (100) dans les rainures (24B) de manière à exercer une action d'étirement de la partie périphérique (104) le long d'une trajectoire parallèle au profil prédéfini (K).

9. Procédé selon l'une quelconque des revendications précédentes, comportant en outre :
- l'insertion d'au moins un produit dans la partie creuse (102) ;
- la fourniture d'une seconde feuille (200) de matériau d'emballage ;
- le thermoscellage de la seconde feuille (200) sur la première feuille (100) qui a été formée et contient l'au moins un produit dans la partie creuse (102).

10. Procédé selon la revendication 9,
dans lequel le thermoscellage de la seconde feuille (200) sur la première feuille (100) inclut :
- la fourniture d'un organe de support (42) et le positionnement de la première feuille (100) dans un état où la partie périphérique (104) repose sur l'organe de support (42) ;
- l'actionnement d'un organe de thermoscellage (44) pour presser une partie (204) correspondante de la seconde feuille (200) contre la partie périphérique (104) de la première feuille et chauffer la partie (204) correspondante de la seconde feuille (200) et/ou la partie périphérique (104) de la première feuille (100) pour provoquer une fixation entre les deux parties.

11. Procédé selon la revendication 10, dans lequel ledit organe de pression est ledit organe de thermoscellage (44) et ladite surface de contraste est définie par ledit organe de support (42).

12. Procédé selon la revendication 11, dans lequel l'organe de support (42) est conforme et dans lequel l'organe de thermoscellage (44) presse la seconde feuille et la partie périphérique de la feuille contre l'organe de support conforme de sorte que, lorsqu'il existe une variation d'épaisseur sur la partie périphérique (104) de la feuille créée par la présence de plis (108), une action d'étirement de la partie périphérique (104) est provoquée le long d'un trajet parallèle au profil prédéfini (K1) et/ou dans une direction transversale à celui-ci.

13. Procédé selon la revendication 12, dans lequel l'organe de support (42) est composé d'un matériau conforme, de préférence présentant une dureté non inférieure à 60 SH.

14. Procédé selon l'une quelconque des revendications précédentes, dans lequel la première feuille (100) ou à la fois la première feuille (100) et la seconde feuille (200) comporte(nt) une couche de papier extensible.

15. Procédé selon l'une quelconque des revendications précédentes, dans lequel la surface de mise en forme (22A) de la cavité de moule (22) et la surface de fonctionnement (28A) de l'organe de mise en forme (28) sont configurées pour fournir une région de la partie creuse (102), s'étendant le long du profil prédéfini (K1), qui définit, avec la partie périphérique (104), un angle (q) égal ou supérieur à 90°, de préférence compris entre 90° et 95°.

16. Procédé selon l'une quelconque des revendications précédentes, dans lequel la fourniture d'une feuille (100) inclut la fourniture d'une feuille présentant une surface utile totale pour former un nombre donné de parties creuses entourées de parties périphériques correspondantes, et dans lequel la feuille (100) présente une série de découpes configurées pour identifier un nombre de régions distinctes de la feuille, égal au nombre donné, sur lequel il convient de former des parties creuses respectives entourées de parties périphériques et qui sont reliées aux parties restantes de la feuille uniquement par des parties de liaison étroites positionnées autour des régions individuelles.

17. Emballage obtenu via un procédé selon l'une quelconque des revendications précédentes, dans lequel la partie creuse (102) de la feuille (100) formée présente un rapport profondeur/largeur supérieur à 0,39, de préférence compris entre 1:1,8 et 1:2,5, dans lequel la partie périphérique (104) définit un angle (q) avec la région de la partie creuse (102) s'étendant le long du profil prédéfini (K1) qui est égal ou supérieur à 90°, de préférence compris entre 90° et 95°.

18. Emballage selon la revendication 17, dans lequel les plis de la feuille présents sur la partie creuse (102) font saillie à partir de la surface externe de la partie creuse (102) d'un étirement (H) inférieur ou égal à 0,2 mm.

19. Emballage selon la revendication 17, dans lequel les plis de la feuille présents sur la partie périphérique (104) font saillie à partir du plan de la partie périphérique (104) d'un étirement inférieur ou égal à 0,2 mm.
